# EUROPEAN PATENT APPLICATION

(11) **EP 0 985 998 A2**
(43) Date of publication of application: **15.03.2000**
(21) Application number: 99304517.8
(22) Date of filing: 09.06.1999
(51) Int. Cl.: G06F 1/16

(54) **Convertible wearable computer**

(30) Priority: 11.09.1998 US 151841
(71) Applicant: Xybernaut Corporation, Fairfax, Virginia 22033 (US)
(72) Inventor: Jenkins, Michael D., Burke, Virginia 22015 (US)
(74) Representative: Goode, Ian Roy

(57) **Abstract**

This invention involves a hands-free wearable computer (1) that contains an expandable keyboard (4, 5, 6) and a display (2) integral with its housing. The wearable computer can be used, therefore, either as a hands-free wearable computer or as a small laptop computer with a normal size keyboard. The keyboard is integral with the top of the computer housing and can be folded away when the computer is voice activated, and folded out when the computer is used as a laptop.

## Description

This invention relates to wearable computers and, more specifically, to a wearable computer that can be converted into a laptop computer.

It is known to utilize wearable computers, especially the voice activated type such as the Mobile Assistant® provided by Xybernaut Corporation of Fairfax, Virginia. The basic patent on wearable computers U.S. 5,305,244 (Newman I) describes a compact portable computer which is completely supported by a user for hands-free retrieval and display of information. The computing apparatus includes a voice recognition module in communication with a processor for receiving audio commands from the user. Also disclosed are means for converting the received audio commands into electrical signals for recognizing the converted electrical signals and for sending the recognized electrical signals to the processor for processing. The entire apparatus including the voice-recognition module is supported by a user. The computing apparatus of Newman 1 includes a display in communication with the processor for receiving information from the processor and for displaying the received information for the user. The display is supported by the user whereby the user may operate the computing apparatus to display information in a hands-free manner utilizing only audio commands. The compact computer of Newman I is presently being commercialized by Xybernaut Corporation in a product called the Mobile Assistant.

In EP-A-0,767,417 (Newman II) a body-supported computer is disclosed having various activation means, all of which are hands-free. In Newman II, the system described can be used with other system components and communication means such as telephone systems, cellular communications, radio, etc. In addition to audio activation means, eye-tracking activation means, electroencephalography (EEG), head and arm tracking means and mixtures thereof are disclosed. An important improvement in Newman II over Newman I is that less than all of the components need to be worn; for example, the somewhat heavy processor and housing can be located in a remote location not on the user's body. Also important is that the computing apparatus has means for temporarily plugging an external storage device in the bus for transferring data between the internal storage device and the external storage device only using the defined activation means so as to permit hands-free operation of the computer during data transfer.

A further feature of a wearable computer is that an adapter may be used in each mobile computer to permit the use therein of cellular or hardware telephone communication. In place of the cellular telephone communication means, a radio frequency, infrared, laser or fiberoptic transceiver or other communication means may be used. These will generally be referred to in this disclosure as "communication means". Communication means can be accessed through the host computer or by using the headset with its built-in communication capability. Thus, communication can be between headsets, headsets and host computers and between host computers activated by headsets as the control devices. A scenario of operation would be with a team of users repairing a tank. The host computer unit is positioned on the belt of the team leader. The other team members activate the host computer using their headsets. One team member requires information stored on a host computer located back at the maintenance shop two miles from the repair site. This team member acquires the remote communication means and a cellular telephone link. The information required is referenced and viewed on his headset. After obtaining the correct reference material, it is downloaded to the repair site host for other team members to utilize by viewing it in their headsets. Thus, local as well as remote hosts can be activated by team members' headsets. Information can then be obtained from remote hosts and downloaded to the local host computer.

There are also known some portable computer structures that utilize keyboard activation means. Obviously, these units are not wearable nor, more importantly, are they operable hands-free. Laptop computers are well known in the art; however as noted, they are too heavy and too large to be worn by a user. Smaller keyboard operated computers such as the IBM Palm Top PC 110 are small enough but because of their dimensions, the keyboard is very small and difficult to use.

What is needed is a computer structure that does not rely upon keyboard or mouse input and can be worn. While wearable hands-free computers are very desirable, there are situations where the hands-free aspect is not needed and where it would be equally convenient to use a keyboard or mouse for input. Also, there are times when the head mounted display or other disconnected displays are not needed. Situations often exist where both a hands-free activation computer and a hands activated computer are needed or desirable.

It is therefore an object of this invention to provide a wearable computer devoid of the above noted disadvantages.

Another object of this invention is to provide a voice activated wearable computer that permits keyboard or mouse activation.

A further object of this invention is to provide a computer structure that can be worn or used as a laptop without any additional structures needed.

Yet another object of this invention is to provide a wearable computer with a larger keyboard than previously available in palm top computers.

Still a further object of this invention is to provide a wearable computer that has integral therewith a display means.

Another yet further object of this invention is to provide a wearable computer that can be used hands-free or with an integral keyboard.

Another still further object of this invention is to provide a wearable computer with audio activation, keyboard activation and mouse activation means usable if needed with a keyboard and monitor, both of which are permanently attached to the housing.

These and other objects of this invention are accomplished generally speaking by a compact wearable computer structure having all of the parts such as monitor, keyboard, mouse, and computer components integral therewith. Nothing needs to be attached for activation or display. The upper cover of the computer housing folds up to become the display means which can be used when the computer is in either the body-worn worn or laptop mode. When the body-worn structure is converted to the laptop system, a keyboard in one embodiment is pulled out from the sides of the housing to provide an ample size keyboard, easily used since it is not much smaller, if any, than a conventional laptop computer. Earlier we discussed some prior art computers where the keyboard was considered too small for practical use; the present invention provides a portable body-worn computer with a near normal size keyboard. Thus, the structure of this invention provides a computer usable interchangeably as a voice-activated, hands-free, body-worn computer or as a laptop with a conventional keyboard and monitor. When the term "voice-activated" is used throughout this specification and claims, it is intended that the other hands-free activation means disclosed in EP-A-0,767,417 be included as equivalents. The computing apparatus includes a housing which may have securing means for removably securing the housing to a user for support by the user. The housing further includes storage means for storing previously entered information, and processor means, communicating with the storage means, for receiving, retrieving and processing information and user commands in accordance with a stored program. Since large databases of ETMs and IETMs will be accessed by the mobile computing apparatus, a means of easily interfacing storage means containing the databases is required. The housing of the computing apparatus includes an access port whereby various storage means containing data can be interfaced and communication established. Access and transfer of data between the storage means and the computing apparatus can be accomplished entirely under control of the various hands-free activation means described in this application. Alternatively, access and transfer of data can be accomplished by use of the keyboard or mouse when used in the laptop mode. The access port allows direct electrical attachment of the storage means; however, other wired and wireless connections can also be used. The computing apparatus may also include eye-tracking, brain actuation means, transducer and converter means with or without audio transducer and converter means in communication with the processor means, for receiving commands from the user, for converting the received commands into electrical signals, for recognizing the converted electrical signals, and for sending the recognized electrical signals to the processor means. The transducer and converter means may be supported by the user. The computing apparatus further includes display means in communication with the processor means for receiving information from the processor means and for displaying the received information for the user, the display means being supported by the user whereby the user may operate the computing apparatus to display information in a hands-free manner utilizing only brain activation or eye tracking with or without audio commands, or the display can be the flip-up type monitor when used as a laptop.

In addition to the voice activation means used in Newman I as noted earlier, these two other above-noted activation means have been contemplated by the present invention, i.e. eye-tracking and brain-activation means (EEG). Using the same general system described in Newman I, voice activation may be fully or partially replaced by or used with either eye-tracking means and/or by brain actuated technology means. In some situations, any combination of voice activation means, eye-tracking activation means and brain-actuation means may be desirable in a Newman I type portable, hands-free computer system. In combination with the above activation means some computing environments may utilize head and arm-tracking means; for example, such an environment could be a virtual reality application.

The system concept of eye-tracking permits the operator to manipulate the computer completely hands-free by tracking the eye and interpreting its movements as "mouse" commands to the application. Generally, the eye-tracking system is head-mounted on the user but may be used in any suitable manner. As with audio commands, eye-tracking can be used hands-free and can be designed to be completely private or customized. As noted earlier, the eye-tracking system can be the only commanding system used with the present computer when worn or it can be used, as above noted, with the voice audio command system described in Newman I or with brain-actuated means. The eyetracker interface used in the present invention can be any suitable eye-tracking system such as the system described in the publication "A New 'Look'", OEM Magazine, May 1995 issue.

The advantages in using eye-tracking, voice or EEG, in the present invention are several; i.e. simplicity and speed are primary considerations. It is much faster to use these rather than have to hand manipulate a keyboard or other tracking and activating devices. However, there are situations that require keyboard use; the present structure provides both.

The keyboard used in the present invention when extended out from the computer housing can approximate the keyboard dimensions of a conventional laptop. Various configurations can be used in the keyboard structure; it can contain two side pieces that are pulled out from the housing, or the keyboard can be made up of three sections (1) a stationary section positioned on the upper surface of the housing, (2) a left foldable keyboard section and (3) a right foldable keyboard section. Whatever means are used, the final extended keyboard to be used will approximate the keyboard size of a conventional laptop, i.e. 20 - 38 cm (8-15 inches). The drawings clearly illustrate two keyboard embodiments that can be used together with any other suitable extendable keyboard structure. The upper cover or lid of the portable computer of this invention is, when not in the body-worn mode, similar to those used in a laptop for the monitor. When the computer is worn, the monitor or display can be a head-mounted display flat panel display or any other suitable display for use in a body-worn mode. Any suitable keyboard or display may be used in both the body-worn and laptop mode of the present invention. To easily enable use as a laptop, both the display and keyboard are an integral part of the housing and not an add-on to be connected thereto. All parts are contained and protected in the computer housing so nothing gets lost or damaged because of attaching, detaching or storing apart from the main housing. When the computer of this invention is used as a wearable computer, it can be worn around the waist or torso of the user. Also, the computer housing has a port for the connection thereto of an external monitor, such as a flat panel or a head mounted display similar to the head mounted display of EP-A-0,767,417. The user therefore has an option of using the attached monitor (as shown in Figures 1-4), using an external flat panel display, or using an external head mounted display as in EP-A-0,767,417.

Embodiments of the invention will now be described, by way of example, with reference to the accompanying drawings, in which:

Figure 1 is a top perspective side view of one embodiment of the present invention with pullout keyboard sections in an expanded mode and the display open and exposed.

Figure 2 is a top perspective side view of the embodiment of figure 1 with the keyboard sections recessed into the computer housing and the display lid closed.

Figure 3 is a top perspective side view of a second embodiment of this invention with fold-down sections of the keyboard and the monitor open.

Figure 4 is a side perspective of the embodiment of figure 3 where the keyboard sections are folded down.

Fig. 5 is a perspective view of the computer of this invention when the computer is worn and the integral monitor is used.

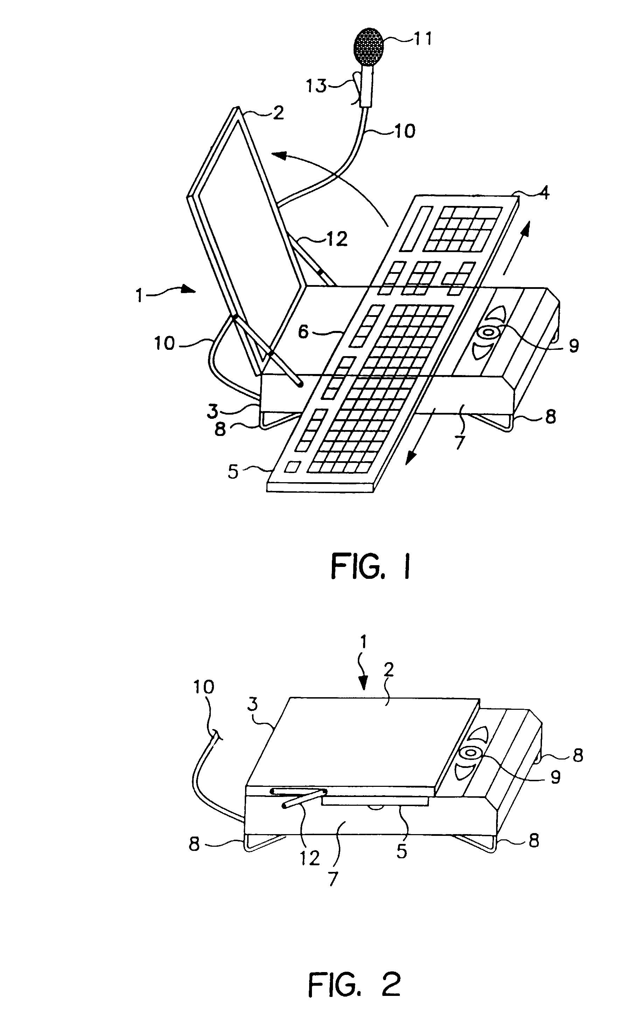

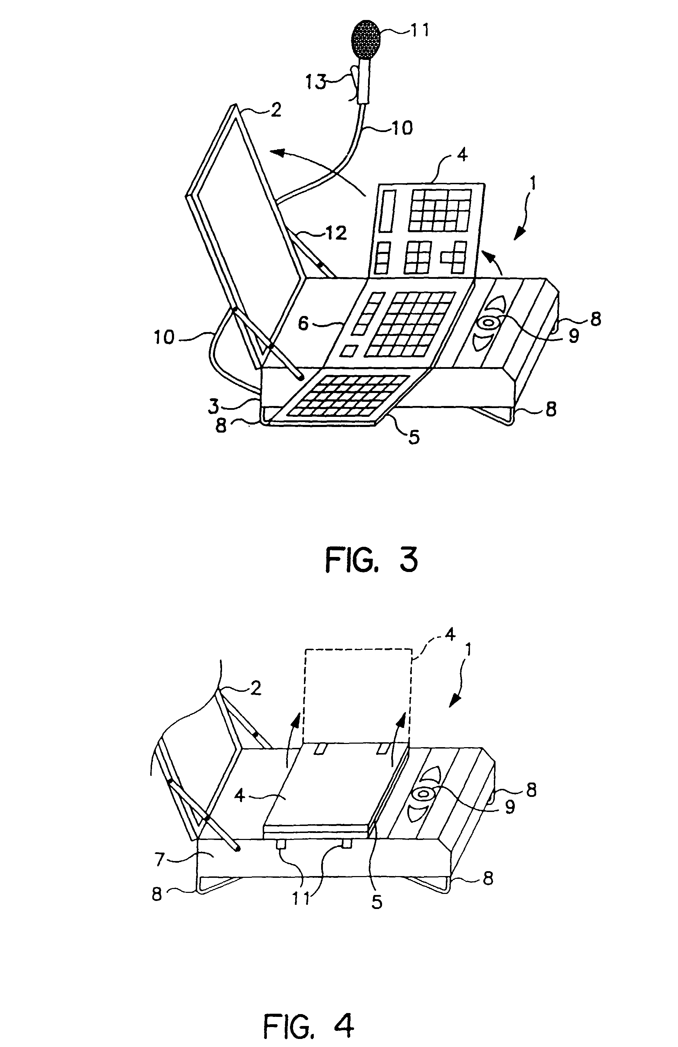

In figure 1 the mobile computer 1 of this invention is illustrated wherein the lid 2 which becomes the display 2 is raised in a position ready for use. When the mobile computer 1 of this invention is body worn, it has the appearance of figure 2 with all ports or outlets to head-mounted or other displays located in the back computer portion 3. When the computer 1 is to be used as a laptop, it takes on the appearance of figure 1 where pullout keyboard sections 4 and 5 combine with fixed keyboard section 6 to provide a substantially normal size keyboard. This enables the provision of a substantially normal size keyboard in a body-worn computer. The drawings illustrate two types of expendable keyboard sections, a pullout of figures 1 and 2 and a fold down version of figures 3 and 4; however, any suitable means may be used to provide a substantially standard or normal (20 - 38 cm (8-15 inch)) keyboard. A monitor 2 is attached to the computer housing 8 in any suitable way. There is thus provided a body-worn computer with both a substantially normal size keyboard 4, 5, 6 and an attached display means 2 integral with the computer housing 7 and attached thereto by movable hinges 12. Keyboard side sections 4 and 5 are movably recessed into the top sides of computer housing 7 and are merely pulled out to be on the same horizontal plane with fixed keyboard section 6 which is secured to and extends substantially across the width of computer housing 7. When side sections 4 and 5 are pulled out and monitor 2 is lifted in vertical position, the computer 1 is used as any laptop computer would be used. When computer 1 is used as a body-worn computer, side sections 4 and 5 are recessed into the computer housing as shown in figure 2 and monitor 2 may be in a down position forming the lid of computer 1. Obviously, if desirable, the monitor 2 may be used when the computer 1 is worn. Computer legs 8 are also used as belt loops when the computer 1 is used as a body-worn computer. Generally, when used in the body-worn mode, a head-mounted display, a wrist display or a flat panel display is preferably used. The mouse controls 9 can also be used in the laptop mode but, as described in Newman I and II, it can also be used when the computer 1 is body worn. The back portion 3 of computer 1 contains ports or receptacle openings to the outside of the computer housing 7 that is connected to an internal bus of the processor means; other internal computer components including the storage means are also communicating with the internal bus. There are also means for temporarily plugging an external storage device into the bus for transferring data between the internal storage device and the external storage device using only said activating means so as to permit hands-free operation of the computer during data transfer. The hands-free activating means, as earlier noted, is selected from the group consisting of audio activation means, eye-tracking activation means, electroencephalography activation means and mixtures thereof Also provided for in back portion 3 are ports for connection of cable 10 to a microphone 11 or other activation means.

In figures 3 and 4, a second embodiment of the present invention is illustrated The sections 4 and 5 of the keyboard are foldable rather than pullout sections as in figures 1 and 2. In this version of the invention, hinges 11 foldably connect sections 4 and 5 to the top side portion of computer housing 7 and are folded out as shown in figure 3 when ready for use in a laptop mode and are folded in as shown in figure 4 when used in the body-worn mode. Display 2 is generally closed when the computer 1 is used in the body-worn mode. When folded out as shown in figure 3, the sections 4 and 5 form with fixed section 6 the complete substantially normal size keyboard 4, 5, 6. As noted earlier, the keyboard provided by this invention approximates the size of a laptop keyboard, or referred to herein as "normal" or "standard" or "substantially normal". When the keyboards of figures 1 and 2 or figures 3 and 4 are extended outwardly or unfolded, this will be referred to in the specification and claims as "expanded mode".

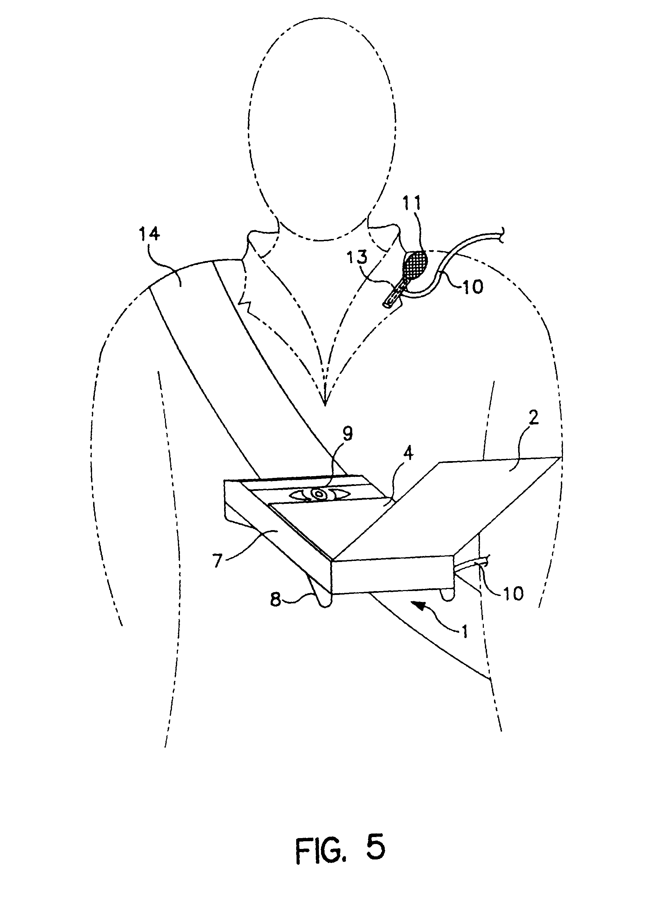

When the computer 1 is worn as shown in figure 5 and in EP-A-0,767,417, the computer 1 can be voice-activated and hands-free. In figure 5, the computer 1 is attached to a strap 14 and worn around the shoulder or torso of the user. In this manner the user can readily see the monitor 2 when it is in a lifted mode. A microphone 11 is clipped via clip 13 to the lapel or clothing of the user so that he or she is free to use their hands as needed to repair a piece of machinery or the like. A microphone cable 10 extends from the computer 1 to the back of the user to the microphone 11.

## Claims

1. A computer structure comprising a computer housing, activation means, means to be used as a wearable computer, and means to be used as a laptop computer, said activation means being hands-free when said computer structure is used as a wearable computer, said activation means comprising a keyboard and/or mouse when said computer structure is used as a laptop computer, and at least a portion of said keyboard being movable and an integral part of said computer housing and providing when in its expanded mode a substantially normal size keyboard, said hands-free activation means being selected from the group consisting of audio activation means, eye-tracking activation means, electroencephalography activation means, head and arm tracking means, and mixtures thereof.

2. The computer structure of claim 1 wherein said computer housing contains a monitor as an integral component thereof.

3. The computer structure of claim 1 wherein said computer housing contains a lid section which when raised provides a display means for said computer structure.

4. The computer structure of any one of claims 1 to 3 wherein said keyboard comprises a fixed and pullout sections, said pullout sections being recessed within sides of said computer housing.

5. The computer structure of any one of claims 1 to 3 wherein said keyboard comprises a fixed and foldable sections, said foldable sections being movably positioned on an upper portion of said computer housing.

6. The computer structure of claim 1 wherein said computer housing comprises a movable monitor and a movable keyboard as permanently attached components thereof.

7. The computer structure of any one of claims 1 to 6 wherein said computer housing comprises mouse activation means on an upper front section of said computer housing.

8. The computer structure of any one of claims 1 to 7 wherein said computer housing has means for attachment to a user's body.

9. The computer structure of claim 8 wherein said computer housing has supports which also act as user attachment means.

10. A portable computer operable in two alternative modes, the computer comprising hands-free activating means for operating the computer in a first mode. and a keyboard for operating the computer in a second mode, the keyboard including at least a part which is movable between a stored, non-operative, position and an expanded position in which it comprises at least part of a fully functional keyboard.
